# FASCICULE DE BREVET EUROPEEN

(11) **EP 3 555 655 B1**
(45) Date de publication et mention de la délivrance du brevet: **14.10.2020**
(21) Numéro de dépôt: 17794348.7
(22) Date de dépôt: 09.11.2017
(51) Int. Cl.: G01S 7/40

(54) **DISPOSITIF POUR MESURER LES PERFORMANCES ELECTROMAGNETIQUES D'UN RADAR AU SOL**
VORRICHTUNG ZUR MESSUNG DER ELEKTROMAGNETISCHEN LEISTUNG EINES BODENRADARS
DEVICE FOR MEASURING THE ELECTROMAGNETIC PERFORMANCE OF A GROUND RADAR

(30) Priorité: 15.12.2016 FR 1601789
(43) Date de publication de la demande: 23.10.2019
(73) Titulaire: THALES, 92400 Courbevoie (FR)
(72) Inventeur: GARNIER, Jean-Marc, 45404 Fleury les Aubrais (FR); LE THOMAS, Jean-Luc, 45370 Clery Saint Andre (FR)
(74) Mandataire: Marks & Clerk France
(86) Numéro de dépôt international: PCT/EP2017/078767
(87) Numéro de publication internationale: WO 2018/108400

(56) Documents cités:
- CN-A- 103 901 413
- US-A1- 2005 128 136
- US-B1- 7 218 273
- VIRONE G ET AL: "UAV-based antenna and field measurements", 2016 IEEE CONFERENCE ON ANTENNA MEASUREMENTS & APPLICATIONS (CAMA), IEEE, 23 octobre 2016 (2016-10-23), pages 1-3, XP033040928, DOI: 10.1109/CAMA.2016.7815760
- WASHBURN LIBE ET AL: "Antenna calibration for oceanographic radars using aerial drones", 2016 IEEE CONFERENCE ON ANTENNA MEASUREMENTS & APPLICATIONS (CAMA), IEEE, 23 octobre 2016 (2016-10-23), pages 1-4, XP033040919, DOI: 10.1109/CAMA.2016.7815751

## Description

L'invention concerne un dispositif pour mesurer les performances électromagnétiques d'un radar au sol, et notamment ses performances de détection. Elle se situe dans le domaine des moyens de vérification des performances de détection de radars installés au sol.
Lorsqu'un radar sort de sa chaîne de fabrication, il est nécessaire de tester ses performances. Plusieurs séries de tests valident le fonctionnement d'un radar. Des tests sont prévus au niveau des différents sous-ensembles tout au long de la mise au point du radar.
Au final, il faut tester les performances du radar dans son ensemble, et notamment dans des configurations de test les plus proches possibles de la réalité. Après installation sur site, des mesures complémentaires sont effectuées.
Actuellement, les mesures des performances des radars au sol reposent sur les méthodes suivantes.
Dans une première méthode, on utilise une balise fixe, montée sur un mât ou sur une tour. Un inconvénient de cette méthode est notamment la difficulté à mouvoir le système composé de la balise et du mât, ce qui limite considérablement les emplacements de mesures, aussi bien en azimut qu'en site, ce type de mesure étant essentiellement réalisé en usine.
Dans une autre méthode, utilisée lors des installations sur site, on utilise des vols de calibration avec des avions. Cette solution présente plusieurs inconvénients, en plus de son coût très élevé :
- Impossibilité de faire des vols à très basse altitude, ce qui empêche de faire les vérifications de paramètres à proximité de la cime des arbres ;
- Impossibilité de faire des vols à vitesses supersoniques sur certains territoires ;
- Impossibilité de faire des mesures dans toutes les directions et au dessus des villes.
Une méthode alternative de calibration divulguée dans US2005/128136 utilise une cible d'étalonnage avec un drone doté de dispositifs d'augmentation de détermination de position. Le dispositif de position trouve la position réelle du drone à un moment donné, et le dispositif d'augmentation augmente la section radar de la cible. Un dispositif de calibrage détecte une erreur système représentant la différence entre la position réelle et la position détectée et fournit l'erreur à un système radar.
Dans ces conditions les évolutions de performances des radars, en raison de l'évolution de l'environnement, telle que par exemple la construction de nouveaux bâtiments, d'éoliennes, ou de la pousse de végétation, peuvent bien sûr être simulées, mais ne peuvent être confirmées ou infirmées sur site.
Un but de l'invention est notamment de pallier les inconvénients précités. A cet effet, l'invention a pour objet un dispositif pour mesurer les performances électromagnétiques d'un radar installé au sol, ledit dispositif comportant au moins :
- une station au sol ayant une fonction de balise apte à émettre des signaux à destination dudit radar ;
- une plateforme volante embarquant un système d'émission et de réception aiguillant les signaux émis par ladite station vers ledit radar et aiguillant les signaux émis par ledit radar vers ladite station, ledit système d'émission et de réception comportant :
   ∘ un ensemble antennaire orienté sensiblement selon un axe horizontal, apte à émettre et recevoir des signaux dans la direction dudit radar;
   ∘ une antenne orientée vers le sol, apte à émettre et recevoir des signaux dans la direction de ladite station.

Le système d'émission et de réception est par exemple embarqué sur un drone.

Dans un mode de réalisation particulier, ladite station au sol comporte au moins des moyens d'émission et des moyens de réception, un générateur de forme d'ondes et des moyens de traitement pilotant ledit générateur, les moyens de traitement simulant des signaux générés par ledit générateur et transmis audit radar via lesdits moyens d'émission, lesdits signaux issus dudit générateur simulant notamment des échos de cibles en réponse à des signaux reçus dudit radar.

Lesdits signaux issus dudit générateur simulent par exemple des environnements électromagnétiques donnés.

L'ensemble antennaire comporte par exemple deux antennes :
- une antenne apte à émettre des signaux vers ledit radar reliée en entrée à un amplificateur de puissance ;
- une antenne apte à recevoir des signaux dudit radar reliée en sortie à un amplificateur faible bruit ;
ledit amplificateur de puissance et ledit amplificateur faible bruit étant reliés à ladite antenne orientée vers le sol au moyen d'un circulateur hyperfréquence.

Lesdites antennes sont par exemple de type hélicoïdal.

Ladite station au sol est par exemple apte à être embarquée dans un véhicule léger.

D'autres caractéristiques et avantages de l'invention apparaîtront à l'aide de la description qui suit, faite en regard de dessins annexés qui représentent :
- La figure 1, une illustration des méthodes de mesures de performances radar selon l'art antérieur ;
- La figure 2, une illustration d'un dispositif selon l'invention ;
- La figure 3, un exemple de réalisation possible du système d'émission et de réception utilisé dans un dispositif selon l'invention ;
- La figure 4, un exemple de plateforme embarquant le système d'émission et de réception précité ;
- La figure 5, un exemple de réalisation de la station au sol d'un dispositif selon l'invention.

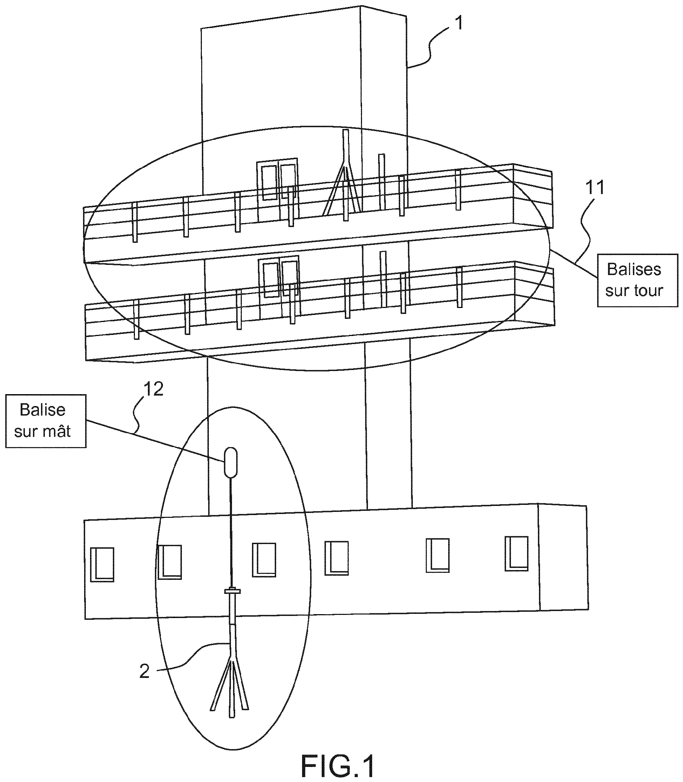

La figure 1 illustre une des méthodes de l'art antérieur, pour mesurer les performances de détections de radars au sol. Elle présente à titre d'exemple une tour 1 équipée de balises 11, disposées sur deux étages. Elle présente également un mât 2, mobile, équipé d'une balise 12. Un radar sous test, non représenté, est disposé en regard de cette tour et de ce mât.
Les balises émettent des séquences de signaux simulant diverses cibles. Elles reçoivent également les signaux émis par le radar sous test et réémettent des signaux, toujours en simulant des cibles possibles.
Les balises, montées sur tour ou sur mât, ont notamment comme inconvénient de ne pas pouvoir tester le radar à des sites de visée différents. Les balises sur mât peuvent être déplacées mais ne sont pas conçues pour être déployées à des hauteurs significativement différentes. On ne peut donc pas tester les performances en limite de la canopée par exemple.
Par ailleurs, un vol d'avion ne peut pas être effectué en dessous de 150 mètres du sol, ni au dessus des villes, compte-tenu des règlements en vigueur.
Ainsi, en dehors de la visualisation de la situation aérienne et de vols de calibration dédiés, il n'existe actuellement pas d'autres moyens de vérifier de manière étendue les performances de détection en espace libre d'un radar installé.

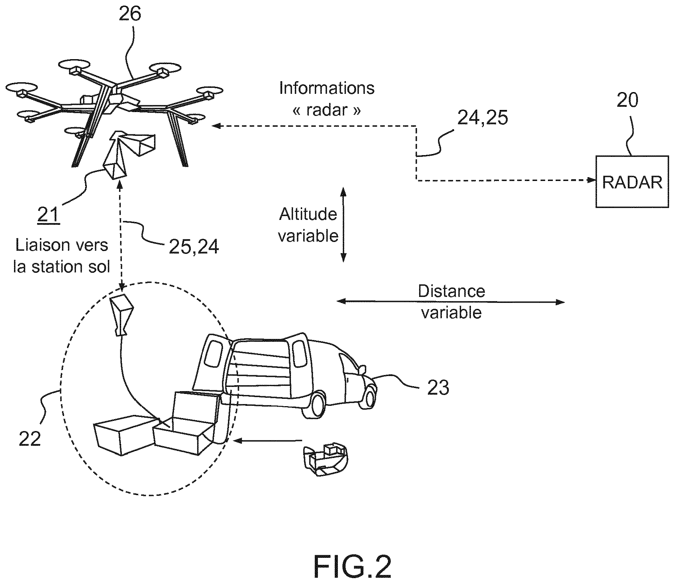

La figure 2 illustre un dispositif selon l'invention. Le dispositif comporte au moins un système d'émission et de réception aéroporté 21 et une station 22 au sol réalisant une fonction de balise telle que celle équipant le mât de la figure 1, notamment une fonction de balise répondeuse ou de balise produisant un environnement électromagnétique perturbant par exemple. La station au sol peut elle-même être embarquée dans un véhicule 23.
Les signaux 24 émis par le radar 20 sous test sont aiguillés vers la station au sol via le système d'émission et de réception 21. De même, les signaux 25 émis par la station au sol à destination du radar lui sont aiguillés via ce système d'émission et de réception. Le système d'émission et de réception aéroporté 21 a ainsi une fonction de relai de la balise au sol.

Le système d'émission et de réception 21 est embarqué sur une plate-forme volante 26, un drone par exemple. Le système d'émission et de réception capte les signaux issus du radar 20 pour les aiguiller vers la station au sol. En sens inverse, il capte les signaux émis par la station au sol pour les aiguiller vers le radar.
L'ensemble du dispositif est placé à une distance variable du radar à tester. La plateforme volante est en vol stationnaire au-dessus de la station au sol. La plate-forme vole à une altitude variable, typiquement entre 0 et 150 mètres. Elle peut être placée également à une distance variable par rapport au radar 20, de quelques kilomètres à une dizaine de kilomètres par exemple.

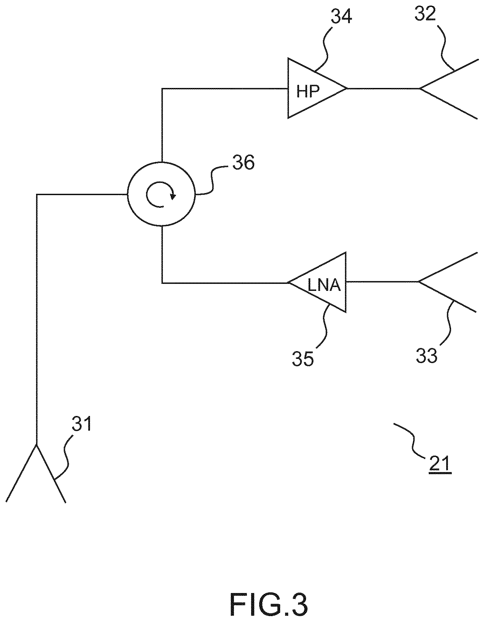

La figure 3 illustre par un schéma de principe un exemple de réalisation du système d'émission et de réception aéroporté 21. Ce système est passif dans ce sens qu'il n'a qu'un rôle d'aiguillage. Il comprend les moyens classiques d'amplification, de guidage et de réception pour recevoir et réémettre les signaux, de la première antenne vers la deuxième antenne et vice versa.
A cet effet, il comporte :
- une antenne 31 orientée vers le sol, commune à l'émission et à la réception, apte à émettre et recevoir des signaux dans la direction de la station 22 ;
- une paire d'antennes orientées sensiblement selon un axe horizontal, apte à émettre et recevoir des signaux dans la direction radar 20, une antenne 32 étant dédiée à l'émission et une antenne 33 étant dédiée à la réception.

Un amplificateur de puissance 34 est placé en amont de l'antenne d'émission 32 alors qu'un amplificateur faible bruit 35 est placé en aval de l'antenne de réception 33. La voie d'émission 34, 32 et la voie de réception 33, 35 communiquent avec l'antenne 31 dédiée à la station au sol via un circulateur hyperfréquence 36. Un signal reçu par cette antenne 31, depuis la station au sol, est ainsi orienté vers la voie d'émission 34, 32 à destination du radar. Inversement, un signal reçu sur la voie de réception 33, 35 depuis le radar et orienté vers l'antenne 31 à destination de la station au sol.

Les antennes aéroportées 31, 32, 33 sont par exemple de type hélicoïdal. Un autre type d'antenne peut être utilisé selon les bandes de fréquences du radar.

La figure 3 présente un ensemble antennaire d'émission et de réception vers le radar composé d'une paire d'antennes 31, 32. Il est bien sûr possible de prévoir une seule antenne, affectée à l'émission et à la réception. Dans ce cas, un deuxième circulateur relié à l'antenne d'émission et de réception peut être utilisé pour isolé l'amplificateur de puissance 34 de l'amplificateur faible bruit 35.

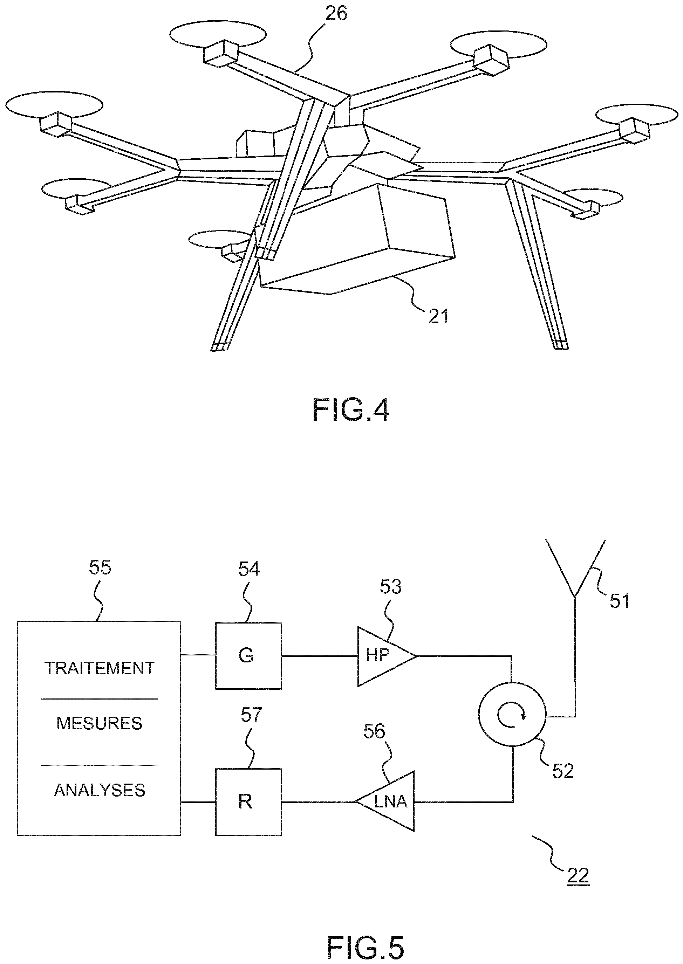

La figure 4 illustre un drone 26 portant le système d'émission et de réception 21 représenté par un colis. Le poids du système est notamment fonction de la puissance de réémission nécessaire ainsi que des moyens d'alimentation électriques utilisés. Il dépend aussi de la bande de fréquence de fonctionnement du radar. Le poids augmente quand on passe de la bande Ku à la bande L en passant par la bande S, le poids augmentant avec la longueur d'onde.
Le drone utilisé doit avoir une capacité d'emport suffisante, de l'ordre de 10 kilogrammes par exemple.
La figure 5 présente les blocs fonctionnels d'un exemple de réalisation de la station au sol 22, d'autres modes de réalisation étant bien sûr possibles. Comme il a été indiqué précédemment, cette station réalise au moins les fonctions d'une balise utilisées classiquement pour mesurer les performances d'un radar installé.

La station au sol 22 comporte une antenne 51 d'émission et de réception, orientée pour coopérer avec l'antenne 31 du système d'émission et de réception aéroporté. Elle est reliée par un circulateur hyperfréquence 52 d'une part à une voie d'émission et d'autre part à une voie de réception.

La voie d'émission comporte un amplificateur de puissance 53 amplifiant les ondes générées par un générateur de forme d'ondes 54. Ce dernier est piloté par des moyens de traitement. Ces moyens de traitement peuvent être programmés pour simuler toutes sortes de formes d'ondes correspondant à différentes cibles du radar, ces formes d'ondes étant émises en réponse à un signal du radar 20 reçu sur la voie de réception.

La voie de réception comporte au moins un amplificateur faible bruit et des circuits de réception, ces derniers comportant notamment des convertisseurs analogiques-numériques pour coder numériquement les signaux reçus avant transmission aux moyens de traitement 55. La réception peut être du type homodyne ou hétérodyne. Dans ce dernier cas, les circuits de réception 57 comportent des moyens de transposition de fréquence.

Les moyens de traitement sont capables d'une part de simuler toutes sortes d'échos de cibles vers le radar en réponse aux signaux émis par celui-ci ou de simuler plusieurs situations ou environnements électromagnétiques donnés, par exemple des situations de perturbations électromagnétiques. Tous ces signaux de simulation sont émis vers le radar via les moyens d'émission et de réception aéroportés 21. Les moyens de traitement sont notamment capables de simuler tous types de surfaces équivalents radar (SER), une très grande gamme de vitesses de cibles ainsi qu'une très grande plage de distances de cibles au radar.
Les moyens de traitement peuvent également émettre des signaux simulant des situations d'attaque.
Pour simuler toutes ces situations, les moyens de traitement comportent par exemple en mémoire des modèles correspondant à chacune de ces situations.
Les moyens de traitement sont capables d'autre part de mesurer et/ou d'analyser les signaux émis par le radar de façon à émettre une réponse adéquate à un signal émis.

Les moyens d'émission 54, 53, 51 et de réception 56, 57 utilisés peuvent être des moyens standards, ayant seulement pour contrainte les conditions de fonctionnement.

Les mesures de performances du radar sont réalisées à partir des différents types signaux produits par la station au sol, le nombre de types de signaux étant pouvant être simulés étant infini. Les mesures des performances sont effectuées au niveau du radar avec des moyens connus de l'homme du métier.

La station au sol peut facilement être embarquée dans un véhicule léger. En coopération avec le système d'émission et de réception aéroporté 21, elle peut se déployer dans une multitude d'environnement et notamment en présence d'objets ou d'éléments perturbants tels que des constructions, immeubles ou éoliennes par exemple.

L'invention présente de nombreux avantages.

Utilisé en vol stationnaire, le dispositif selon l'invention a l'avantage de pouvoir faire une excursion en altitude entre quelques mètre et l'altitude maximum autorisée pour la plateforme volante 26, typiquement 150 mètres s'il s'agit d'un drone, ce qui est irréalisable avec un mât traditionnel et encore moins avec une balise montée sur un tour comme illustré en figure 1. Le dispositif selon l'invention offre ainsi la capacité de faire des mesures à différentes altitudes par rapport au sol, sur une plage importante de faible altitude.

L'invention a encore comme avantage qu'elle présente une très grande mobilité grâce à la station au sol qui peut être déplacée très facilement par une camionnette par exemple, le système d'émission et de réception étant également très facilement transportable.

L'architecture du dispositif selon l'invention, sans liaison filaire, avec la latitude de faire varier altitude et positionnement d'une position de cible simulée par rapport au radar, grâce au système d'émission et de réception aéroporté 21 et à la mobilité de la station au sol permet de teste les radars dans de nombreuses conditions, notamment dans des conditions ou un vol réel de test n'est pas possible. Même dans des cas où un vol de test pourrait être réalisé, les opérations de test ont alors un coût tellement élevé que l'utilisation d'un dispositif selon l'invention reste avantageux en raison de sont coût opérationnel très largement inférieur.

Le dispositif selon l'invention peut avantageusement permettre d'effectuer plusieurs types de missions.
En plus de la contribution aux mesures de performances du radar, il peut effectuer des mesures de rayonnement DREP, « Danger des Rayonnements Electromagnétiques sur les Personnes ».
Il peut également effectuer des mesures de rayonnement RNE (« Rayonnements Non Essentiels ») ou encore des mesures de rayonnement DRAM (« Danger des Rayonnements Electromagnétiques sur les Armes et Munitions »).
Ces mesures DRPE, RNE et DRAM sont effectuées en réception au niveau de la station au sol. Plus précisément les signaux émis par le radar sous test sont reçus puis numérisés, les valeurs numérisées étant analysées par les moyens de traitement. La mobilité et la grande excursion des positions possibles des moyens d'émission et de réception permettent des mesures exhaustives.

Un dispositif selon l'invention peut donc avantageusement, mais seulement, être utilisé dans les applications suivantes :
- remplacement d'avions pour des validations de performances de radars, à leur installation, ou au cours de leur vie, par simulation de vol avec différentes vitesses et différents types d'avions, de toutes dimensions ;
- mesures de performances en champ libre sur site ;
- mesures de conformité par rapport aux différentes réglementations, en particulier pour des mesures de rayonnement RNE, DREP ou DRAM ;
- mesures de comportement en présence d'objets perturbants, telles que des constructions ou des éoliennes par exemple ;
- entraînement d'opérateurs à des utilisations particulières, par exemple pour simuler des vols saturant ou des perturbations électromagnétiques.

Enfin, un dispositif selon l'invention est économique. Il permet bien sûr de remplacer avantageusement des vols d'avion coûteux pour des mesures de performances radar. Mais en plus, il est économique en tant que tel car il peut être réalisé avec des composants matériels standards, disponibles pour la plupart dans le commerce, tant en ce qui concerne les composants hyperfréquences ou électroniques, que les plateformes (un drone pour le système d'émission et de réception relai et un véhicule léger pour la station au sol).

## Revendications

1. Dispositif pour mesurer les performances électromagnétiques d'un radar (20) installé au sol, **caractérisé en ce qu'**il comporte au moins :
- une station au sol (22) ayant une fonction de balise apte à émettre des signaux à destination dudit radar ;
- une plateforme volante (26) embarquant un système d'émission et de réception (21) aiguillant les signaux émis par ladite station vers ledit radar (20) et aiguillant les signaux émis par ledit radar vers ladite station (22), ledit système d'émission et de réception (21) comportant :
∘ un ensemble antennaire (32, 33) orienté sensiblement selon un axe horizontal, apte à émettre et recevoir des signaux dans la direction dudit radar (20) ;
∘ une antenne (31) orientée vers le sol, apte à émettre et recevoir des signaux dans la direction de ladite station (22).

2. Dispositif selon la revendication 1, **caractérisé en ce que** le système d'émission et de réception est embarqué sur un drone (26).

3. Dispositif selon l'une quelconque des revendications précédentes, **caractérisé en ce que** ladite station au sol (22) comporte au moins des moyens d'émission (53, 51) et des moyens de réception (51, 56), un générateur de forme d'ondes (54) et des moyens de traitement (55) pilotant ledit générateur, les moyens de traitement simulant des signaux (25) générés par ledit générateur et transmis audit radar (20) via lesdits moyens d'émission.

4. Dispositif selon la revendication 3, **caractérisé en ce que** lesdits signaux (55) issus dudit générateur simulent des échos de cibles en réponse à des signaux reçus dudit radar (20).

5. Dispositif selon l'une quelconque des revendications 3 ou 4, **caractérisé en ce que** lesdits signaux (55) issus dudit générateur simulent des environnements électromagnétiques donnés.

6. Dispositif selon l'une quelconque des revendications précédentes, **caractérisé en ce que** l'ensemble antennaire comporte deux antennes (32, 33) :
- une antenne (31) apte à émettre des signaux vers ledit radar reliée en entrée à un amplificateur de puissance (34) ;
- une antenne (32) apte à recevoir des signaux dudit radar reliée en sortie à un amplificateur faible bruit (35) ;
ledit amplificateur de puissance (34) et ledit amplificateur faible bruit (35) étant reliés à ladite antenne orientée vers le sol au moyen d'un circulateur hyperfréquence (36).

7. Dispositif selon la revendication 6, caractérisé en ce lesdites antennes (31, 32, 33) sont de type hélicoïdal.

8. Dispositif selon l'une quelconque des revendications précédentes, **caractérisé en ce que** ladite station au sol (22) est apte à être embarquée dans un véhicule léger (23).

9. Dispositif selon l'une quelconque des revendications précédentes, **caractérisé en ce que** lesdits moyens de traitement (55) sont aptes à effectuer des mesures de rayonnement RNE, DREP ou DRAM sur les signaux émis par ledit radar (20).

## Patentansprüche

1. Vorrichtung zur Messung der elektromagnetischen Leistungsfähigkeit eines am Boden installierten Radars (20), **dadurch gekennzeichnet, dass** sie mindestens Folgendes umfasst:
- eine Bodenstation (22), welche eine Signalsendefunktion aufweist, welche in der Lage ist, Signale, die für den Radar bestimmt sind, zu senden;
- eine fliegende Plattform (26), an Bord mitführend ein Sende- und Empfangssystem (21), welches die durch die Station an den Radar (20) gesendeten Signale leitet und die durch den Radar an die Station (22) gesendeten Signale leitet, wobei das Sende- und Empfangssystem (21) Folgendes umfasst:
∘ eine Antennenanordnung (32, 33), welche im Wesentlichen entlang einer horizontalen Achse ausgerichtet ist, welche in der Lage ist, Signale in Richtung des Radars (20) zu senden und zu empfangen;
∘ eine Antenne (31), ausgerichtet zum Boden, welche in der Lage ist, Signale in Richtung der Station (22) zu senden und zu empfangen.

2. Vorrichtung nach Anspruch 1, **dadurch gekennzeichnet, dass** das Sende- und Empfangssystem an Bord einer Drohne (26) mitgeführt wird.

3. Vorrichtung nach einem der vorhergehenden Ansprüche, **dadurch gekennzeichnet, dass** die Bodenstation (22) mindestens Sendemittel (53, 51) und Empfangsmittel (51, 56), einen Wellenformerzeuger (54) und Verarbeitungsmittel (55) umfasst, welche den Erzeuger steuern, wobei die Verarbeitungsmittel Signale (25) simulieren, welche durch den Erzeuger erzeugt werden und an den Radar (20) über die Sendemittel übertragen werden.

4. Vorrichtung nach Anspruch 3, **dadurch gekennzeichnet, dass** die Signale (55), welche aus dem Erzeuger stammen, Echos von Zielen in Reaktion auf von dem Radar (20) empfangene Signale simulieren.

5. Vorrichtung nach einem der Ansprüche 3 oder 4, **dadurch gekennzeichnet, dass** die von dem Erzeuger stammenden Signale (55) gegebene elektromagnetische Umgebungen simulieren.

6. Vorrichtung nach einem der vorhergehenden Ansprüche, **dadurch gekennzeichnet, dass** die Antennenanordnung zwei Antennen (32, 33) umfasst.
- eine Antenne (31), die in der Lage ist, Signale an den Radar zu übertragen, welche am Eingang mit einem Leistungsverstärker (34) verbunden ist;
- eine Antenne (32), die in der Lage ist, Signale von dem Radar zu empfangen, welche am Ausgang mit einem rauscharmen Verstärker (35) verbunden ist;
wobei der Leistungsverstärker (34) und der rauscharme Verstärker (35) mit der in Richtung des Bodens ausgerichteten Antenne mithilfe eines Hyperfrequenz-Zirkulators (36) verbunden sind.

7. Vorrichtung nach Anspruch 6, **dadurch gekennzeichnet, dass** die Antennen (31, 32, 33) Spiralantennen sind.

8. Vorrichtung nach einem der vorhergehenden Ansprüche, **dadurch gekennzeichnet, dass** die Bodenstation (22) in der Lage ist, an Bord eines leichten Fahrzeugs (23) mitgeführt zu werden.

9. Vorrichtung nach einem der vorhergehenden Ansprüche, **dadurch gekennzeichnet, dass** die Verarbeitungsmittel (55) in der Lage sind, Strahlungsmessungen vom Typ RNE, DREP oder DRAM an den von dem Radar (20) ausgesandten Signalen vorzunehmen.

## Claims

1. A device for measuring the electromagnetic performance of a ground radar (20), **characterised in that** it comprises at least:
- a ground station (22) with a beacon function able to transmit signals intended for said radar;
- a flying platform (26) carrying a transmission and reception system (21) directing the signals transmitted by said station to said radar (20) and directing the signals transmitted by said radar to said station (22), said transmission and reception system (21) comprising:
∘ an antenna assembly (32, 33) substantially oriented along a horizontal axis, able to transmit and receive signals in the direction of said radar (20);
∘ a groundward oriented antenna (31), able to transmit and receive signals in the direction of said station (22).

2. The device as claimed in claim 1, **characterised in that** the transmission and reception system is placed on board a drone (26).

3. The device as claimed in any one of the preceding claims, **characterised in that** said ground station (22) comprises at least transmission means (53, 51) and reception means (51, 56), a waveform generator (54) and processing means (55) controlling said generator, the processing means simulating signals (25) generated by said generator and transmitted to said radar (20) via said transmission means.

4. The device as claimed in claim 3, **characterised in that** said signals (55) originating from said generator simulate echoes from targets in response to signals received from said radar (20).

5. The device as claimed in any one of claims 3 or 4, **characterised in that** said signals (55) originating from said generator simulate given electromagnetic environments.

6. The device as claimed in any one of the preceding claims, **characterised in that** the antenna assembly comprises two antennae (32, 33):
- an antenna (31) able to transmit signals to said radar, which is connected at input to a power amplifier (34);
- an antenna (32) able to receive signals from said radar, which is connected at output to a low noise amplifier (35);
said power amplifier (34) and said low noise amplifier (35) being connected to said groundward oriented antenna by means of a microwave circulator (36).

7. The device as claimed in claim 6, **characterised in that** said antennae (31, 32, 33) are of the helical type.

8. The device as claimed in any one of the preceding claims, **characterised in that** said ground station (22) is able to be placed on board a light vehicle (23).

9. The device as claimed in any one of the preceding claims, **characterised in that** said processing means (55) are able to perform RNE, DREP or DRAM radiation measurements on the signals transmitted by said radar (20).
